# NEUE EUROPÄISCHE PATENTSCHRIFT

(11) **EP 1 147 801 B2**
(45) Veröffentlichungstag und Bekanntmachung des Hinweises auf die Entscheidung über den Einspruch: **17.12.2014**
(45) Hinweis auf die Patenterteilung: 15.09.2004
(21) Anmeldenummer: 01108785.5
(22) Anmeldetag: 07.04.2001
(51) Int. Cl.: B01D 53/94, B01J 29/06, B01J 37/30

(54) **Verfahren zur selektiven Reduktion von Stickoxiden**
Process for the selective reduction of nitrogen oxides
Procédé pour la réduction sélective d'oxydes d'azote

(30) Priorität: 22.04.2000 DE 10020100
(43) Veröffentlichungstag der Anmeldung: 24.10.2001
(73) Patentinhaber: Umicore AG & Co. KG, 63457 Hanau-Wolfgang (DE)
(72) Erfinder: Schäfer-Sindlinger, Adolf, Dr., 60488 Frankfurt (DE); Pfeifer, Marcus, Dr., 42719 Solingen (DE); Spurk, Paul, Dr., 64732 Bad König (DE); Demel, Yvonne, 60386 Frankfurt (DE); Kreuzer, Thomas, Dr., 61184 Karben (DE); Lox, Egbert, Dr., 63403 Hanau (DE)
(74) Vertreter: Stellbrink, Axel

(56) Entgegenhaltungen:
- EP-A- 0 283 913
- EP-A- 0 955 080
- WO-A-90/13362
- WO-A-96/01689
- WO-A-99/39809
- DE-A- 19 820 682
- US- - 4 961 917

## Beschreibung

Die Erfindung betrifft ein Verfahren zur Reduktion der in einem mageren Abgas eines Verbrennungsmotors enthaltenen Stickoxide durch selektive katalytische Reduktion an einem Reduktionskatalysator mittels Ammoniak, wobei ein Bruchteil des im Abgas enthaltenen Stickstoffmonoxids an einem Oxidationskatalysator zu Stickstoffdioxid oxidiert wird, bevor das Abgas zusammen mit Ammoniak über den Reduktionskatalysator geleitet wird. Dabei wird die Oxidation so geführt, dass das Abgas vor Kontakt mit dem Reduktionskatalysator 30 bis 70 Vol.-% Stickstoffdioxid enthält.

Das Verfahren der selektiven katalytischen Reduktion (SCR = selective catalytic reduction) wird seit langem im Kraftwerksbereich zur Reduktion der in den Rauchgasen eines Kraftwerks enthaltenen Stickoxide eingesetzt. Rauchgase von Kraftwerken wirken wegen ihres hohen Anteils von Sauerstoff netto oxidierend. Die in ihnen enthaltenen Stickoxide lassen sich deshalb nur schwer zu Stickstoff reduzieren. Gelöst wurde dieses Problem durch die sogenannte selektive katalytische Reduktion, bei der das Rauchgas mit Ammoniak vermischt über einen geeigneten Reduktionskatalysator bei Temperaturen zwischen 300 und 550° C geleitet wird. Als Reduktionskatalysatoren werden neben Vanadium- und Wolframoxid enthaltende Titandioxid-Katalysatoren auch ionenausgetauschte Zeolithe wie zum Beispiel ZSM-5, Mordenit, und Faujasit verwendet. Reduktionskatalysatoren, die für die selektive katalytische Reduktion geeignet sind, werden im folgenden auch als SCR-Katalysatoren bezeichnet.

Seit einigen Jahren wird versucht, die selektive katalytische Reduktion auch zur Entfernung der Stickoxide aus den Abgasen von Dieselmotoren und mager betriebenen OttoMotoren einzusetzen. Auch diese Abgase weisen einen hohen Anteil von bis zu 15 Vol.-% Sauerstoff auf. Die in ihnen enthaltenen Stickoxide bestehen abhängig vom Betriebszustand des Motors zu 60 bis 95 Vol.-% aus Stickstoffmonoxid.

Die bekannten SCR-Katalysatoren haben den Nachteil, dass ihre katalytische Aktivität für die bei der Autoabgasreinigung vorliegenden hohen Raumgeschwindigkeiten ungenügend ist und einer raschen Alterung unterliegt. Bei Vanadiumoxid enthaltenden Katalysatoren kommt es oberhalb von 700° C zu einem deutlichen Aktivitätsverlust.

Gemäß der DE 198 20 682 A1 ist es bekannt, zur Verbesserung der Reduktion der Stickoxide im mageren Abgas von Verbrennungsmotoren zunächst den Gehalt des Abgases an Stickstoffdioxid auf bis zu 50 Vol.-% anzuheben. Dies geschieht gemäß der zitierten Offenlegungsschrift durch Oxidation von Stickstoffmonoxid in einer elektrischen Gasentladung zu Stickstoffdioxid. Das so behandelte Abgas wird dann unter Zufuhr eines Reduktionsmittels, bevorzugt Ammoniak, über einen SCR-Katalysator geleitet. Als geeignete SCR-Katalysatoren werden Katalysatoren aus dem Bereich der Kraftwerksentstickung sowie mit Kupfer-Kationen getauschte ZSM-5 Zeolithe genannt.

Auch gemäß der US 5,891,409 ist es bekannt, dass viele Reduktionskatalysatoren eine höhere Aktivität für die Reduktion von Stickstoffdioxid als für Stickstoffmonoxid besitzen. Daher schlägt die US 5,891,409 vor, zuerst das im mageren Abgas eines Verbrennungsmotors enthaltene Stickstoffmonoxid an einem Oxidationskatalysator zu Stickstoffdioxid zu oxidieren und dann das gebildete Stickstoffdioxid unter Zugabe von Kohlenwasserstoffen als Reduktionsmittel an einem SCR-Katalysator zu Stickstoff, Kohlendioxid und Wasser umzusetzen. Als bevorzugter Reduktionskatalysator wird ein Katalysator aus γ-Aluminiumoxid genannt.

Die WO 99/39809 beschreibt ein System für die Verminderung von Stickoxiden in Verbrennungsabgasen von insbesondere Dieselmotoren, welches aus einem Oxidationskatalysator, der wenigstens ein Teil des Stickstoffinonoxids zu Stickstoffdioxid umsetzt, einem Partikelfilter, einer Quelle für ein Reduktionsmittel wie Ammoniak und einem SCR-Katalysator besteht. Mit diesem System kann die Umsetzung der Stickoxide deutlich verbessert werden. Bevorzugt wird ein SCR-Katalysator auf der Basis eines V₂O₅/WO₃/TiO₂-Katalysators eingesetzt.

EP-A-0 283 913 beschreibt ein Verfahren zur Entfernung von Stickoxiden aus sauerstoffenthaltenden Gasströmen. Dabei wird der Gasstrom zunächst mit einem Oxidationskatalysator in Abwesenheit von Ammoniak in Kontakt gebracht, um das im Abgas enthaltene Stickstoffmonoxid zu Stickstoffdioxid zu oxidieren. Anschliessend wird Ammoniak zugegeben und das Gasgemisch über einen Reduktionskatalysator geleitet, wobei NO₂ zu Stickstoff und Wasser reduziert wird.

Ein Problem der üblicherweise im Kraftwerksbereich eingesetzten V₂O₅/WO₃/TiO₂-Katalysatoren ist die mögliche Emission von flüchtigen, toxischen Vanadiumverbindungen bei höheren Abgastemperaturen. Ein Austausch dieser vanadiumhaltigen Katalysatoren gegen vanadiumfreie Katalysatoren zum Beispiel auf der Basis von mit Übergangsmetallen wie Eisen oder Kupfer ausgetauschten Zeolith-Katalysatoren erscheint wegen der bekannten geringen Alterungsstabilität dieser Katalysatoren nicht geeignet.

Aufgabe der vorliegenden Erfindung ist es, ein Verfahren zur Reduktion der in einem mageren Abgas enthaltenen Stickoxide durch selektive katalytische Reduktion an einem Reduktionskatalysator mittels Ammoniak anzugeben, welches keine oder gegenüber dem Stand der Technik eine wesentlich verminderte Emission von Vanadiumverbindungen bei hohen Abgastemperaturen aufweist und sich durch eine hervorragende Aktivität und Langzeitstabilität des SCR-Katalysators auszeichnet.

Diese Aufgabe wird gelöst durch ein Verfahren zur Reduktion der in einem mageren Abgas eines Verbrennungsmotors enthaltenen Stickoxide durch selektive katalytische Reduktion an einem Reduktionskatalysator mittels Ammoniak, wobei ein Teil des im Abgas enthaltenen Stickstoffmonoxids zu Stickstoffdioxid oxidiert wird, bevor das Abgas zusammen mit Ammoniak über den Reduktionskatalysator geleitet wird, wobei der Reduktionskatalysator einen mit Eisen, Kupfer, Cer oder Mischungen davon ausgetauschten Zeolithen enthält und die Oxidation des Stickstoffmonoxids an einem Oxidationskatalysator so geführt wird, dass das Abgas vor Kontakt mit dem Reduktionskatalysator 30 bis 70 Vol.-% Stickstoffdioxid enthält, wobei der Reduktionskatalysator mindestens einen Zeolith aus der Gruppe ZSM-5, Beta und Ferrierite enthält.

Erfindungsgemäß wird in dem Verfahren kein V₂O₅/WO₃/TiO₂-Katalysator eingesetzt. Vielmehr wird ein mit bestimmten Übergangsmetallen ausgetauschter Zeolith-Katalysator verwendet. Die Übergangsmetalle sind Eisen, Kupfer, Cer oder Mischungen davon.

Es hat sich gezeigt, dass die Erhöhung des Stickstoffdioxidgehaltes im Abgas die Aktivität der genannten Reduktionskatalysatoren deutlich verbessert und auch die Alterung der Katalysatoren verringert. Daneben steigert Stickstoffdioxid auch insbesondere die Aktivität der Katalysatoren bei tiefen Temperaturen. Es wird vermutet, dass diese positive Wirkung des Stickstoffdioxids darauf beruht, dass zum Beispiel die zweiwertigen Kupferionen im Katalysator durch die selektive katalytische Reduktion zu einwertigen Kupferionen reduziert werden, wodurch ihre katalytische Aktivität vermindert wird. Durch die im Abgas enthaltenen oxidativen Komponenten wie Sauerstoff und Stickstoffdioxid werden die Kupferionen zu zweiwertigen Kupferionen reoxidiert und gewinnen damit ihre ursprüngliche Aktivität zurück. Hierbei wirkt sich Stickstoffdioxid wegen seines höheren Oxidationsvermögens besonders vorteilhaft aus. Dieses Reaktionsprinzip gilt für alle SCR-aktiven Übergangsmetallionen, die einen solchen Valenzwechsel zulassen. Hierzu gehören Ionen von Vanadium, Chrom, Eisen, Nickel, Kupfer, Cer, Praseodym und Terbium. Erfindungsgemäß geeignet sind Ionen des Eisens, Kupfers und Cers.

Für die Erfindung geeignete Zeolithe sind Zeolithe aus der Gruppe ZSM-5, Beta und Ferrierite. Diese Zeolithe können auch als Mischung eingesetzt werden.

Besonders bevorzugt wird ein mit Eisen und/oder Kupfer ausgetauschter ZSM-5 Zeolith als Katalysator verwendet. Er besitzt eine hohe Selektivität zu Stickstoff. Nebenprodukte der SCR-Reaktion wie Lachgas (N₂O) treten bei Verwendung eines Fe-ZSM-5 Katalysators nur im geringen Maße auf.

Zur Bildung von Stickstoffdioxid, beziehungsweise Erhöhung der Stickstoffdioxid-Menge, im motorischen Abgas wird ein Oxidationskatalysator vor den eigentlichen SCR-Katalysator geschaltet. Insbesondere bei Fe-ZSM-5 lassen sich so selbst nach Alterung noch hohe Umsatzraten in der SCR-Reaktion erzielen.

Eine vollständige Umsetzung des Stickstoffmonoxid am Oxidationskatalysator zu Stickstoffdioxid ist nicht erwünscht und kann durch entsprechende Beladung und/oder Dimensionierung des Oxidationskatalysators im Vergleich zum Reduktionskatalysator vermieden werden. Als Oxidationskatalysator kann zum Beispiel ein Platinkatalysator auf einem Trägermaterial aus aktivem, gegebenenfalls stabilisierten, Aluminiumoxid eingesetzt werden. Die Konzentration des Platin auf dem Trägermaterial kann zwischen 0,1 und 5 Gew.-%, bezogen auf das Gesamtgewicht des Katalysators, betragen. Der Katalysator wird in Form einer Beschichtung auf einen üblichen Wabenkörper aufgebracht. Die Beschichtungskonzentration kann zwischen 50 und 200 g/l des Wabenkörpers gewählt werden, um zu gewährleisten, dass das Abgas hinter dem Oxidationskatalysator 30 bis 70 Vol.-% Stickstoffdioxid enthält. Eine weitere Anpassung der geforderten Produktion von Stickstoffdioxid ist über das Volumen des verwendeten Wabenkörpers möglich.

Darüber hinaus ist es Aufgabe des Oxidationskatalysators, das im Abgas enthaltene Kohlenmonoxid und insbesondere die Kohlenwasserstoffe möglichst vollständig zu Kohlendioxid und Wasser umzusetzen, da ansonsten die Kohlenwasserstoffe von dem nachfolgenden Zeolith-Katalysator gespeichert würden. Hiermit wäre die Gefahr einer Verkokung und Deaktivierung des Zeolith-Katalysators verbunden.

Geeignete Oxidationskatalysatoren für die Verwendung in dem erfindungsgemäßen Verfahren sind solche, die als katalytisch aktive Komponenten Platin auf einem hochoberflächigen Trägeroxid, bevorzugt γ-Aluminiumoxid, enthalten. Besonders günstig ist ein mit etwa 5 Gew.-% Siliciumdioxid stabilisiertes Aluminiumoxid.

Der für die selektive katalytische Reduktion benötigte Ammoniak kann dem Abgas vor dem Kontakt mit dem Reduktionskatalysator direkt zugegeben werden. Bevorzugt wird der Ammoniak jedoch an Bord des Fahrzeugs aus einer zu Ammoniak hydrolysierbaren Verbindung gewonnen. Zu diesem Zweck wird dem Abgas nach der teilweisen Oxidation des Stickstoffmonoxids und vor Kontakt mit dem Reduktionskatalysator die hydrolysierbare Verbindung zugefügt und anschließend das Abgas über einen Hydrolysekatalysator geleitet. Als hydrolysierbare Verbindungen eignen sich Harnstoff oder Ammoniumcarbamat.

Bei dem für das Verfahren benötigten SCR-Katalysator handelt es sich um einen mit den genannten Metallionen ausgetauschten Zeolith-Katalysator. Zu seiner Herstellung können verschiedene Ionenaustauschverfahren eingesetzt werden (Feststoffaustausch, Austausch in wässriger Lösung, Austausch in polarer oder unpolarer organischer Lösung). Dabei erweist sich jedoch die Herstellung von Fe-ZSM-5 als besonders schwierig. Übliche Austauschverfahren in wässriger Lösung haben sich als unbrauchbar erwiesen, da Eisen(III)-Verbindungen durch ihre große Hydrathülle kaum in die Poren eines Zeolithen eindringen können und somit den Austausch in saurer Lösung stark erschweren. Ein Austausch in ammoniakalischen Lösungen erwies sich ebenfalls als ungeeignet, da sich hierbei Eisenhydroxid bildet und ausfällt.

Austausch mit wässrigen Lösungen von Eisen(II)-salzen führen in der Regel zunächst zur Oxydation von Eisen(II) zu Eisen(III), was jedoch durch entsprechende Vorbehandlung des Lösungsmittels mit Inertgasen wie z.B. Stickstoff oder Argon umgangen werden kann. Neben Eisen(II)-sulfat und Eisen(II)-chlorid, sind jedoch nur schwer lösliche Eisensalze verfügbar. Bei Verwendung von Salzen mit geringer Löslichkeit geht der Ionenaustausch nur langsam von statten.

Als einfachste und beste Methode hat sich der Feststoffionenaustausch von Zeolithen mit Fe(II)- und Fe(III)-chlorid herausgestellt. Dabei wird die für einen vollständigen Austausch notwendige Menge Eisensalz zusammen mit dem Zeolithen zu einem homogenen Pulver vermischt. Das Gemisch wird dann unter einem Stickstoffstrom soweit erhitzt, bis der Ionenaustausch einsetzt. Die sich bildende Salzsäure wird mit dem Stickstoffstrom ausgetragen. Erfahrungsgemäß ist der Ionenaustausch bei einer Temperatur von 300° C nach etwa 2 Stunden beendet. Der ausgetauschte Zeolith wird dann mit Wasser gewaschen und bei 120°C getrocknet. Danach kann sich eine erneute Temperung bei 300 °C über 2 Stunden unter Stickstoff anschließen.

Der fertige Zeolith-Katalysator wird bevorzugt in Form einer Beschichtung auf Wabenkörper aus Keramik oder Metall aufgebracht. Hierzu wird das Katalysatorpulver zusammen mit Zirkonylnitrat als Binder in Wasser suspendiert. Mit der resultierenden Beschichtungssuspension können die vorgesehenen Wabenkörper in bekannter Weise beschichtet werden. Bevorzugt wird hierbei eine Beschichtungskonzentration von bis zu 200 Gramm Katalysatorpulver pro Liter Volumen der Wabenkörper angestrebt. Nach der Beschichtung wird der Wabenkörper zum Beispiel für die Dauer von 4 Stunden bei etwa 300° C calciniert, um das Katalysatorpulver auf dem Wabenkörper zu fixieren und Zirkonylnitrat in Zirkonoxid überzuführen. Ein bevorzugter Katalysator enthält 1 bis 10 Gew.-% Zirkonoxid, bezogen auf das Gesamtgewicht der Beschichtung.

Zur weiteren Erläuterung der Erfindung dienen die Figuren 1 bis 9 sowie die Beispiele.

Es zeigen:
- **Figur 1:**: Schematischer Aufbau eines Abgasreinigungssystems für die Durchführung des Verfahrens bei direkter Zugabe von Ammoniak zum Abgas
- **Figur 2:**: Schematischer Aufbau eines Abgasreinigungssystems für die Durchführung des Verfahrens bei Gewinnung des Ammoniaks durch Hydrolyse aus einer Ammoniak spendenden Verbindung
- **Figur 3:**: Stickoxid-Umsetzungsgrad X in Abhängigkeit von der Abgastemperatur für einen frischen Fe-ZSM5 Katalysator bei einer Raumgeschwindigkeit von 30000 h⁻¹ und einem NO/NO₂ Volumenverhältnis von 1:1
- **Figur 4:**: Stickoxid-Umsetzungsgrad X in Abhängigkeit von der Abgastemperatur für einen gealterten Fe-ZSM5 Katalysator bei einer Raumgeschwindigkeit von 30000 h⁻¹ und einem NO/NO₂ Volumenverhältnis von 3:1
- **Figur 5:**: Stickoxid-Umsetzungsgrad X in Abhängigkeit von der Abgastemperatur für einen gealterten Fe-ZSM5 Katalysator bei einer Raumgeschwindigkeit von 30000 h⁻¹ und einem NO/NO₂ Volumenverhältnis von 1:1
- **Figur 6:**: Stickoxid-Umsetzungsgrad X in Abhängigkeit von der Abgastemperatur für einen gealterten Fe-ZSM5 Katalysator bei einer Raumgeschwindigkeit von 30000 h⁻¹ und einem NO/NO₂ Volumenverhältnis von 1:3
- **Figur 7:**: NO₂-Gehalt im Abgas nach Oxidationskatalysator bei einer Raumgeschwindigkeit von 60000 h⁻¹ und unterschiedlichen Abgastemperaturen
- **Figur 8:**: NO₂-Gehalt im Abgas nach Oxidationskatalysator bei einer Raumgeschwindigkeit von 120000 h⁻¹ und unterschiedlichen Abgastemperaturen
- **Figur 9:**: NO₂-Gehalt im Abgas nach Oxidationskatalysator bei einer Raumgeschwindigkeit von 180000 h⁻¹ und unterschiedlichen Abgastemperaturen

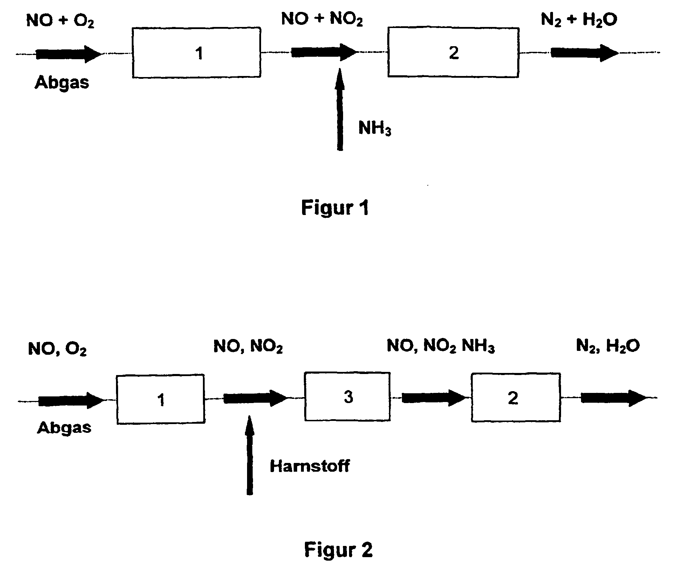

Figur 1 zeigt den schematischen Aufbau eines für das erfindungsgemäße Verfahren geeigneten Abgasreinigungssystems. Es besteht aus einem Oxidationskatalysator (1) und einem nachgeschalteten Reduktionskatalysator (2). In den Oxidationskatalysator tritt das aus dem Verbrennungsmotor kommende Abgas ein, welches unter anderem Stickstoffmonoxid und Sauerstoff enthält. Im Oxidationskatalysator wird ein Teil des Stickstoffmonoxids zu Stickstoffdioxid oxidiert, so dass ein Gemisch aus Stickstoffmonoxid und Stickstoffdioxid den Oxidationskatalysator verlässt. Diesem Gasgemisch wird vor Eintritt in den Reduktionskatalysator Ammoniak als Reduktionsmittel im Molverhältnis NH₃/NOₓ von 0,6 bis 1,6 zugefügt. Im Reduktionskatalysator wird dieses Gasgemisch zu Stickstoff und Wasser umgesetzt. Das Molverhältnis NH₃/NOₓ wird im folgenden auch als alfa-Wert (^{α}) bezeichnet.

Figur 2 zeigt eine Variante des Abgasreinigungssystems von Figur 1. Statt Ammoniak wird dem Abgas hinter dem Oxidationskatalysator eine zu Ammoniak zersetzbare Verbindung wie zum Beispiel Harnstoff zugefügt. Zur Freisetzung des Ammoniaks ist vor den Reduktionskatalysator ein Harnstoff-Hydrolysekatalysator (3) im Abgasstrom angeordnet, der den Harnstoff zu Ammoniak, Kohlendioxid und Wasser zersetzt.

### Herstellung von Reduktionskatalysatoren:

Für die Anwendung im erfindungsgemäßen Verfahren wurden Fe-ZSM5-Katalysatoren wie folgt hergestellt: Zeolith H-ZSM5 mit einem Modul von 40 (Das Modul eines Zeolithen ist sein Molverhältnis SiO₂/Al₂O₃.) wurde sorgfältig mit FeCl₃ vermischt und anschließend unter einem Stickstoffstrom bei 300° C für die Dauer von 2 Stunden getempert. Die Menge des FeCl₃ wurde dabei so bemessen, dass ein vollständiger Austausch des Zeolithen entsprechend seiner Austauschkapazität stattfand. Der ausgetauschte Zeolith wurde dann mit Wasser gewaschen und bei 120°C getrocknet und danach erneut bei 300°C für die Dauer von 2 Stunden unter Stickstoff behandelt.

Das so gewonnene Katalysatorpulver hatten einen Gehalt an Eisen von 1,7 Gew.-%, bezogen auf das Gesamtgewicht des Pulvers. Das Pulver wurde zusammen mit Zirkonylnitrat als Binder in Wasser dispergiert und zur Beschichtung eines konventionellen Wabenkörpers aus Cordierit mit einer Zelldichte von 62 cm⁻² verwendet. Die Beschichtung wurde für die Dauer von 4 Stunden bei 300° C an Luft calciniert. Die fertige Beschichtung enthielt 196 g/l Katalysatorpulver und 6 g/l Zirkonoxid.

### Beispiel:

Zur Untersuchung im erfindungsgemäßen Verfahren wurden Bohrkerne dieser Katalysatoren mit 2,54 cm Durchmesser und 7,62 cm Länge bei einer Raumgeschwindigkeit von 30000 h⁻¹ mit folgender Synthesegasmischung beaufschlagt:

| | |
|---|---|
| 500 | Vol.-ppm Stickoxide im Verhältnis NO:NO₂ von 1:1; 3:1 und 1:3 |
| 450 | Vol.-ppm Ammoniak |
| 5 | Vol.-% Sauerstoff |
| 1,3 | Vol.-% Wasserdampf Rest Stickstoff |

Die Temperatur des Synthesegases wurde in Stufen von 150 auf 525° C erhöht. Für jede Temperaturstufe wurde die Gaszusammensetzung hinter dem Reduktionskatalysator analysiert.

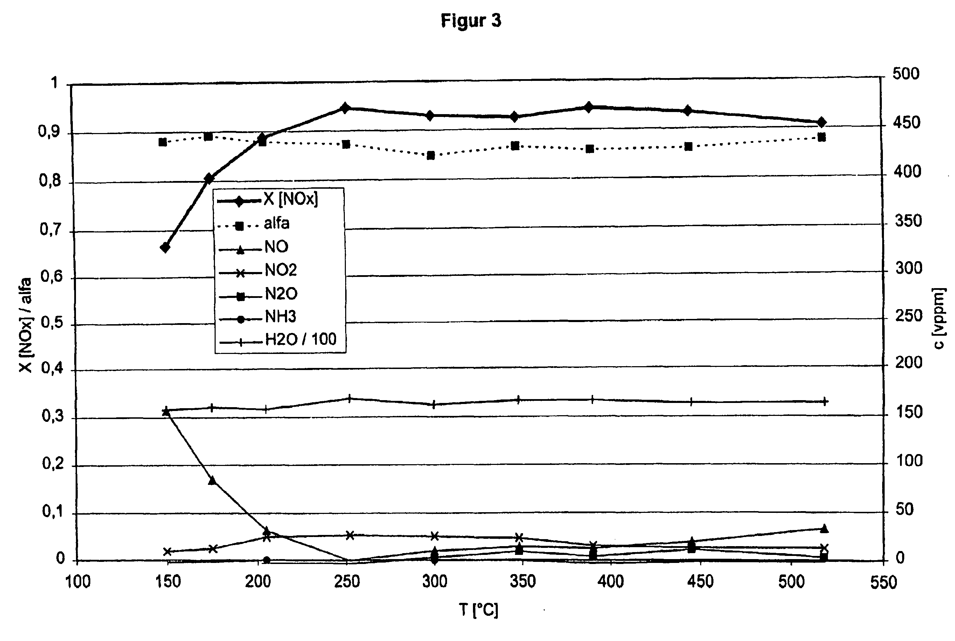

In Figur 3 sind die Ergebnisse für einen frischen Katalysator dargestellt. Das Volumenverhältnis NO/NO₂ betrug in diesem Fall 1:1.

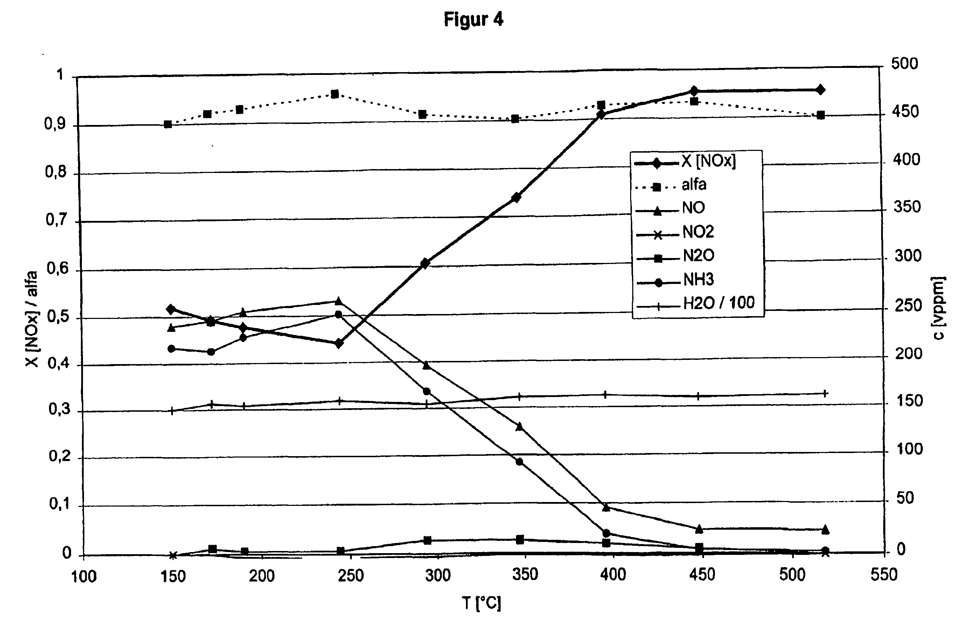

Figuren 4 bis 6 zeigen die Messergebnisse für gealterte Katalysatoren. Zur Alterung wurden die Katalysatoren für die Dauer von 48 Stunden unter hydrothermalen Bedingungen bei einer Temperatur von 650° C gelagert.

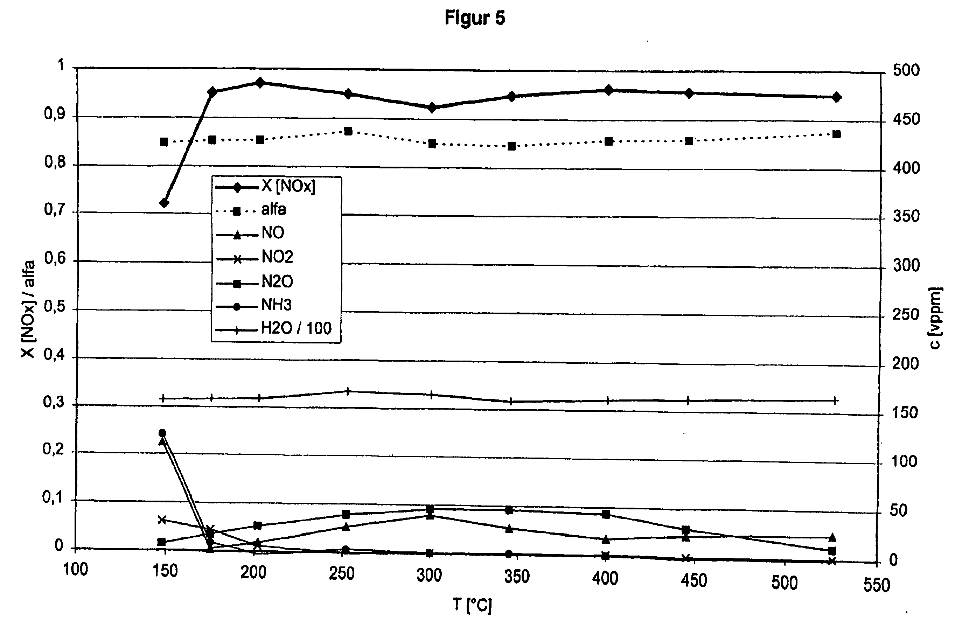

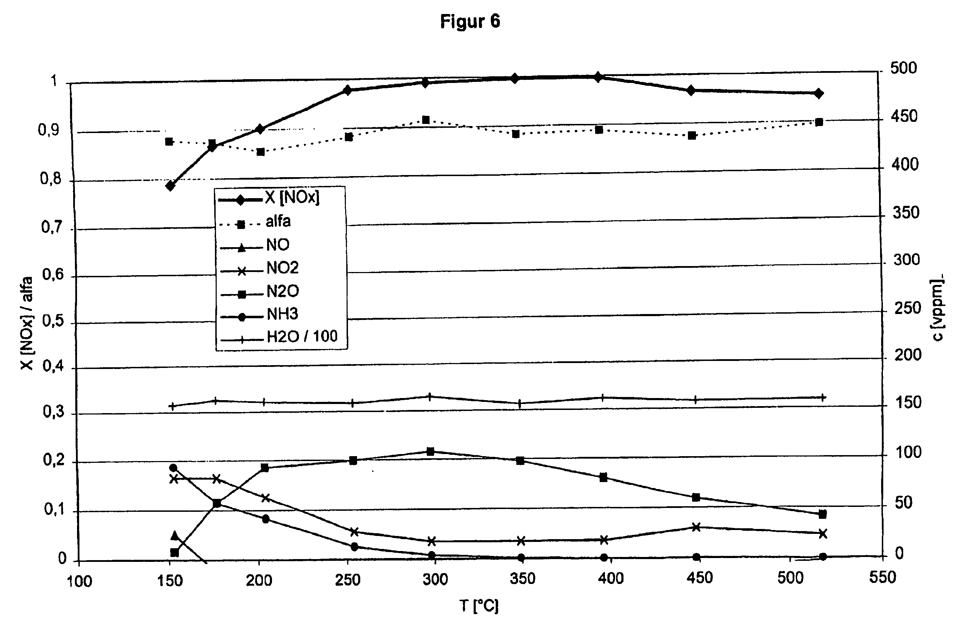

Figur 4 zeigt die Ergebnisse für ein Volumenverhältnis NO/NO₂ von 3:1, Figur 5 für ein Volumenverhältnis NO/NO₂ von 1:1 und Figur 6 für ein Volumenverhältnis NO/NO₂ von 1:3. Wie aus diesen Messungen ersichtlich ist, weist der gealterte Katalysator bei einem Volumenverhältnis NO/NO₂ von 1:1 eine bessere Tieftemperaturaktivität (zwischen 150 und 250° C) auf als der frische Katalysator. Bezüglich der Abhängigkeit der katalytischen Aktivität und der Selektivität der Umsetzung zu Stickstoff vom Volumenverhältnis NO/NO₂ stellt ein Wert von etwa 1:1 ein Optimum dar.

Das geforderte Volumenverhältnis kann durch einen in den Abgasstrom vor den Reduktionskatalysator eingefügten Oxidationskatalysator (Figuren 1 und 2) eingestellt werden.

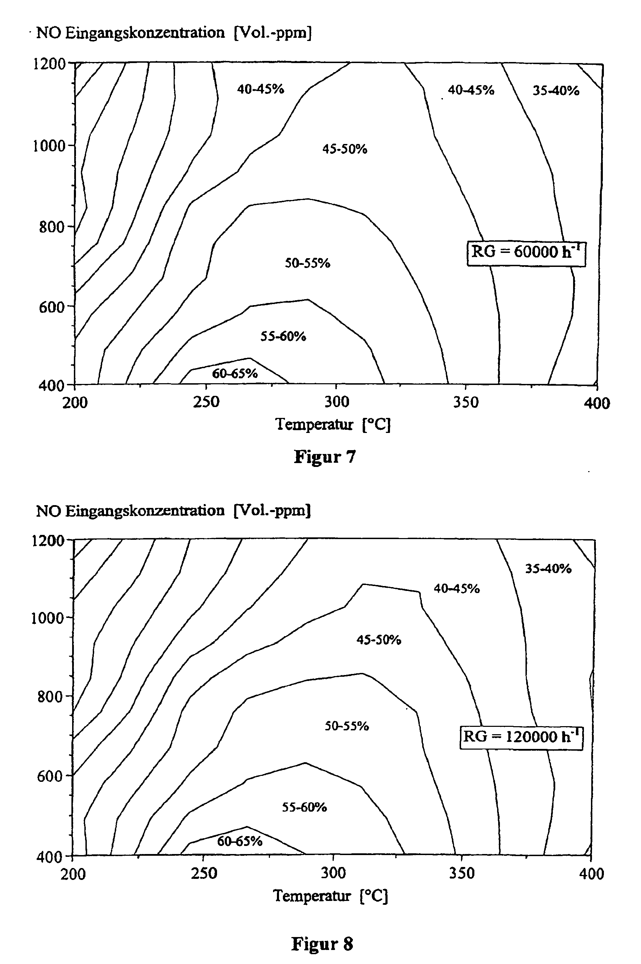

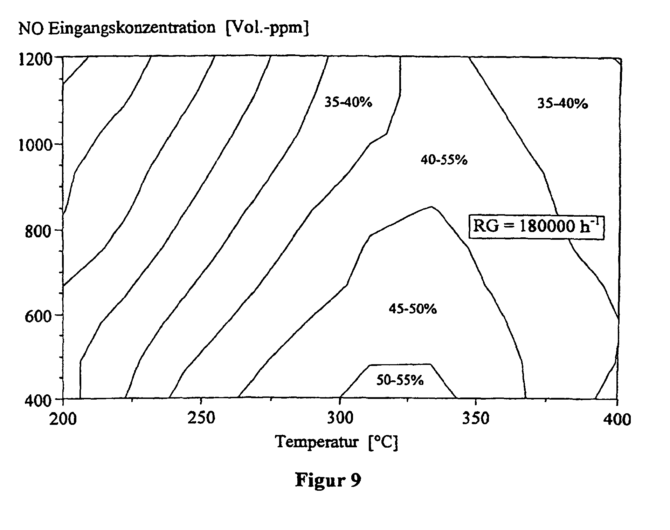

Die Figuren 7 bis 9 zeigen Messungen der Stickstoffdioxid-Konzentration hinter einem Platin-Oxidationskatalysator bei Belastung mit einer Synthesegasmischung der folgenden Zusammensetzung:

| | |
|---|---|
| 500 | Vol.-ppm Stickstoffinonoxid NO |
| 5 | Vol.-% Sauerstoff |
| 1,3 | Vol.-% Wasserdampf Rest Stickstoff |

Der Platinkatalysator war auf einem Wabenkörper aus Cordierit mit einer Zelldichte von 62 cm⁻² in einer Konzentration von 120 g/l aufgebracht. Der Platingehalt des Katalysators betrug 3,2 g Pt pro Liter des Wabenkörpervolumens.

Die Figuren zeigen, dass das geforderte NO/NO₂-Volumenverhältnis über einen weiten Bereich der Raumgeschwindigkeiten RG zwischen 60000 und 180000 h⁻¹ eingehalten werden kann. Hierbei ist zu berücksichtigen, dass die Abgastemperatur eines Motors mit zunehmender Raumgeschwindigkeit, das heißt bei zunehmender Belastung, ansteigt.

## Patentansprüche

1. Verfahren zur Reduktion der in einem mageren Abgas eines Verbrennungsmotors enthaltenen Stickoxide durch selektive katalytische Reduktion an einem Reduktionskatalysator mittels Ammoniak, wobei ein Teil des im Abgas enthaltenen Stick stoffmonoxids zu Stickstoffdioxid oxidiert wird, bevor das Abgas zusammen mit Ammoniak über den Reduktionskatalysator geleitet wird, wobei
der Reduktionskatalysator einen mit Eisen, Kupfer, Cer oder Mischungen davon ausgetauschten Zeolithen enthält und die Oxidation des Stickstoffmonoxids an einem Oxidationskatalysator so geführt wird, dass das Abgas vor Kontakt mit dem Reduktionskatalysator 30 bis 70 Vol.-% Stickstoffdioxid enthält, wobei der Reduktionskatalysator mindestens einen Zeolith aus der Gruppe ZSM-5, Beta und Ferrierite, enthält.

2. Verfahren nach Anspruch 1, wobei
der Reduktionskatalysator einen mit Eisen und/oder Kupfer ausgetauschten ZSM-5 Zeolithen enthält.

3. Verfahren nach einem der vorstehenden Ansprüche,
wobei
der für die selektive katalytische Reduktion benötigte Ammoniak aus einer zu Ammoniak hydrolysierbaren Verbindung gewonnen wird, wozu dem Abgas nach der teilweisen Oxidation des Stickstoffmonoxids und vor Kontakt mit dem Reduktionskatalysator die hydrolysierbare Verbindung zugefügt und anschließend das Abgas über einen Hydrolysekatalysator geleitet wird.

4. Verfahren nach Anspruch 3, wobei
die zu Ammoniak hydrolysierbare Verbindung Harnstoff oder Ammoniumcarbamat ist.

## Claims

1. A process for reducing the nitrogen oxides present in a lean exhaust gas from an internal combustion engine by selective catalytic reduction on a reduction catalyst using ammonia, wherein some of the nitrogen monoxide present in the exhaust gas is oxidized to nitrogen dioxide before the exhaust gas, together with ammonia, is passed over the reduction catalyst, wherein the reduction catalyst contains a zeolite exchanged with iron, copper, cerium or mixtures thereof and oxidation of the nitrogen monoxide on an oxidation catalyst is performed in such a way that the exhaust gas contains 30 to 70 vol.% of nitrogen dioxide before contact with the reduction catalyst, wherein the reduction catalyst contains at least one zeolite from the group ZSM-5, beta, and ferrierite.

2. The process according to claim1, wherein the reduction catalyst contains a ZSM-5 zeolite exchanged with iron and/or copper.

3. The process according to one of the preceding claims, wherein the ammonia required for the selective catalytic reduction is obtained from a compound which can be hydrolyzed to give ammonia, wherein the hydrolyzable compound is added to the exhaust gas after partial oxidation of the nitrogen monoxide and before contact with the reduction catalyst and then the exhaust gas is passed over a hydrolysis catalyst.

4. The process according to claim 3, wherein the compound which can be hydrolyzed to give ammonia is urea or ammonium carbamate.

## Revendications

1. Procédé de réduction des oxydes nitriques contenus dans un gaz d'échappement maigre d'un moteur à combustion interne, faisant intervenir une réduction catalytique sélective effectuée auprès d'un catalyseur de réaction au moyen d'ammoniac,
selon lequel une partie du monoxyde d'azote contenu dans le gaz d'échappement est oxydée en produisant du dioxyde d'azote avant de faire passer le gaz d'échappement, conjointement avec l'ammoniac, par-dessus le catalyseur de réduction,
selon lequel le catalyseur de réduction contient un zéolite échangé avec du fer, du cuivre, du cérium ou des mélanges de ceux-ci, et l'oxydation du monoxyde d'azote est conduite sur un catalyseur d'oxydation de telle manière que le gaz d'échappement contient, avant d'entrer en contact avec le catalyseur de réduction, de 30 à 70 % en volume de dioxyde d'azote,
selon lequel
le catalyseur de réduction contient au moins un zéolite du groupe constitué de ZSM-5, bêta, et ferriérite.

2. Procédé selon la revendication 1,
selon lequel
le catalyseur de réduction contient un zéolite ZSM-5 échangé avec du fer et/ou du cuivre.

3. Procédé selon l'une des revendications précédentes,
selon lequel
l'ammoniac requis pour la réduction catalytique sélective est obtenu à partir d'un composé pouvant être hydrolysé en produisant de l'ammoniac, et à cette fin ledit composé pouvant être hydrolysé est ajouté au gaz d'échappement après l'oxydation partielle du monoxyde d'azote et avant le contact avec le catalyseur de réduction, après quoi le gaz d'échappement est conduit par-dessus un catalyseur d'hydrolyse.

4. Procédé selon la revendication 3,
selon lequel
le composé pouvant être hydrolysé en produisant de l'ammoniac est de l'urée ou du carbamate d'ammonium.
